# EUROPÄISCHE PATENTSCHRIFT

(11) **EP 1 518 413 B1**
(45) Veröffentlichungstag und Bekanntmachung des Hinweises auf die Patenterteilung: **21.12.2016**
(21) Anmeldenummer: 03732202.1
(22) Anmeldetag: 02.04.2003
(51) Int. Cl.: G09G 5/00

(54) **SCHNITTSTELLE UND VERFAHREN ZUR BILDDATENÜBERTRAGUNG MIT PRÜFUNG DER KORREKTHEIT DER ÜBERTRAGUNG DURCH KONTROLLE VON STEUERDATEN**
INTERFACE AND METHOD FOR IMAGE DATA TRANSMISSION
INTERFACE ET PROCEDE DE TRANSMISSION DE DONNEES D'IMAGE

(30) Priorität: 18.06.2002 DE 10227199
(43) Veröffentlichungstag der Anmeldung: 30.03.2005
(73) Patentinhaber: ROBERT BOSCH GMBH, 70442 Stuttgart (DE)
(72) Erfinder: KNEE, Werner, 73728 Esslingen (DE); SPICHALE, Thomas, 69436 Schoenbrunn (DE); STUMBER, Tobias, 70195 Stuttgart (DE); KIRSCHBAUM, Axel, 75417 Muehlacker (DE)
(86) Internationale Anmeldenummer: PCT/DE2003/001083
(87) Internationale Veröffentlichungsnummer: WO 2003/107676

(56) Entgegenhaltungen:
- GB-A- 2 356 300
- JP-A- 61 078 288
- US-A- 5 502 498
- US-A1- 2001 030 649
- US-A1- 2001 038 387
- "LVDS Owner's Manual, MOVING INFO WITH LVDS" 2000 , LVDS OWNER'S MANUAL, XX, XX, REV. 2.0, NATIONAL SEMICONDUCTOR, PAGE(S) 1-17 XP002232434 Absatz [1.0.0] - Absatz [1.2.3]
- ANONYMOUS: 'Open LVDS Display Interface (OpenLDI) Specification', [Online] Nr. V0.95, 13 Mai 1999, Seiten 1 - 45, XP002546352 OPENLDI SPECIFICATION V0.95, NATIONAL SEMICONDUCTORS Gefunden im Internet: <URL:http://pagesperso-orange.fr/keetum/ope nldi.pdf>
- ANONYMOUS: 'DIGITAL VISUAL INTERFACE DVI' DIGITAL VISUAL INTERFACE DVI, XX, XX 02 April 1999, Seiten 1 - 76, XP002950551

## Beschreibung

### Stand der Technik

Die Erfindung geht aus von einer Schnittstelle zur Bilddatenübertragung nach der Gattung des Hauptanspruchs. Zur Bilddatenübertragung sind sowohl analoge, als auch digitale Bilddatenübertragungsverfahren bekannt. Um eine hohe Bildauflösung zu gewährleisten, sind Übertragungsverfahren erforderlich, die eine sichere Datenübertragung bei einem hohen Datendurchsatz gewährleisten. Insbesondere sind hierzu Schnittstellen und Übertragungsverfahren bekannt, bei denen Bilddaten über mehrere Leitungen parallel übertragen werden. Neben den reinen Bilddateninformationen, die die einzelnen Bildpunkte beschreiben, müssen Steuerinformationen übertragen werden, die z.B. der Zeilensynchronisation oder der Bildseitensynchronisation dienen. Hierzu ist es bekannt, alle Steuersignale über eine der Datenleitungen zu übertragen. Aus der US 5,859,669 ist ferner eine Schnittstelle und ein Bilddatenübertragungsverfahren bekannt, bei der diese Steuerinformationen über eine Taktsignalleitung mit übertragen wird, die der Steuerung der Bilddatenübertragung dient. Um zu überprüfen, ob Daten korrekt übertragen werden, ist ferner bekannt, übertragenen Daten zusätzliche Kontrolldaten hinzuzufügen, die zusammen mit den eigentlichen Daten übertragen werden. Durch diese Kontrolldaten wird jedoch die übertragbare Nutzdatenmenge reduziert, da die Übertragungsfrequenz nicht beliebig erhöht werden kann. Um dennoch eine maximale Datenmenge übertragen zu können, wird z.B. gemäß der genannten US 5,859,669 auf eine Kontrolle der übertragenen Daten verzichtet.

Aus der US 2001/0030649 A1 ist ein Verfahren zur Bildanzeige bekannt, bei der Daten paketweise übertragen werden. Zusätzlich wird ein Taktsignal übertragen. Für die Überprüfung, ob die Daten korrekt übertragen worden sind, werden Paritätsbits und ein Zähler eingeführt. Mit den Bilddaten der Farbe rot werden auch Steuerdaten für die Bilddarstellung übertragen.

Ein vergleichbares Verfahren ist aus der US 2001/0038387 A1 bekannt.

Die GB 2356300 A zeigt eine Vorrichtung, bei der die Eigenschaften eines analogen Synchronisierungssignals hinsichtlich der Signalform ausgewertet werden.

Aus der US 5,502,498 ist es bekannt, ein Synchronisierungssignal zusammen mit dem Farbsignal der Farbe grün zu übertragen.

Aus dem Dokument "Open LVDS Display Interface (OpenLDI) Specification" ist ein Verfahren zur Übertragung von Bilddaten zur Bildanzeige bekannt, wobei die Bilddaten zunächst in Serie gebracht werden und anschließend nach der Übertragung am Display wieder parallelisiert werden.

Aus dem Dokument "Digital Visual Interface DVI" ist ebenfalls ein Verfahren zur Übertragung von Bilddaten zur Bildanzeige bekannt, wobei die Bilddaten zunächst mittels eines Encoders in Serie gebracht werden und anschließend nach der Übertragung mittels eines Decoders wieder parallelisiert werden.

### Vorteile der Erfindung

Durch eine erfindungsgemäße Schnittstelle mit den Merkmalen des Hauptanspruchs und durch ein erfindungsgemäßes Verfahren zur Bilddatenübertragung mit den Merkmalen des nebengeordneten Anspruchs wird es dagegen ermöglicht, bei einer unveränderten Datenübertragungsmenge eine Kontrolle der übertragenen Daten für jede der Datenleitungen durchzuführen. Die Überprüfbarkeit wird dabei dadurch erreicht, dass auf jeder Datenleitung für jedes Datenpaket mindestens ein Steuerdatum mit übertragen wird und ein Anliegen oder eine Korrektheit des Steuerdatums für jede der Datenleitungen überprüft wird. Während die übertragenen Bilddaten praktisch jeden Wert einnehmen können, um die zu Verfügung stehende Bandbreite voll ausnutzen zu können, müssen die Steuerdaten dagegen in vorgebbaren Abständen ihren Wert ändern, da eine Zeilen- und Seitenwechselfrequenz einer Anzeige zwar Schwankungen unterlegen sein mag, diese sich jedoch in einer bestimmten Bandbreite bewegen müssen, damit eine flimmerfreie und sichere Bilddarstellung in einer Anzeigeinheit erfolgen kann. Wird nun das Steuerdatum überhaupt nicht empfangen bzw. bleibt es für einen Zeitraum konstant, der die Periodendauer des erforderlichen Wechsels der Zeile, bzw. der Bildseite überschreitet, so ist es wahrscheinlich, dass auch die übertragenen Bilddaten Fehler aufweisen. Insbesondere bei sicherheitsrelevanten Anzeigen kann dieser Fehler mittels der Auswertung der Steuerdaten erkannt werden, so dass ein Benutzer vor einer möglicherweise falschen Anzeige gewarnt werden kann. Die zur Verfügung stehende Datenübertragungsrate kann dennoch maximal ausgenutzt werden.

Durch die in den Unteransprüchen aufgeführten Merkmale sind weitere vorteilhafte Weiterbildungen und Verbesserungen der im Hauptanspruch angegebenen Schnittstelle und des im nebengeordneten Anspruch angegebenen Verfahrens möglich. Besonders vorteilhaft ist, die Bilddaten in Datenpaketen vorzugsweise digital zu übertragen, wobei die Korrektheit eines Datenpakets einzeln überprüft werden kann. Durch ein Datenpaket wird dabei vorteilhaft ein Bildpunkt beschrieben, wobei vorzugsweise für jede Grundfarbe, z.B. rot, grün und blau, jeweils eine Datenleitung vorgesehen ist. In jedem Datenpakt ist dabei ein Steuerdatum vorgesehen, das in seiner knappsten Ausführung ein Bit umfasst, so dass möglichst wenig Datenkapazität für die Übermittlung der Steuerdaten aufgewendet werden muss. Die Steuerdaten umfassen dabei zumindest eine horizontale und einer vertikale Synchronisation der Anzeige, die einer Zeilen- bzw. Bildseitensynchronisation dient.

Ferner ist vorteilhaft, den Zeitpunkt eines erwarteten Steuersignals mit dem tatsächlichen Eintreffen dieses Steuersignals zu vergleichen. Wird das Steuersignal nicht rechtzeitig erfasst, bzw. wird ein erwarteter Zeitpunkt über ein vorgegebenes Maß hinaus überschritten, so ist davon auszugehen, dass das Steuersignal nicht korrekt übertragen worden ist. Möglicherweise liegt daher ein Datenübertragungsfehler vor.

Besonders vorteilhaft ist ferner, die Leitung zur Datenübertragung mit einer Gleichspannung zu beaufschlagen und Daten dadurch zu übertragen, dass diese Gleichspannung um einen Betrag verändert wird, der im Verhältnis zu dem Absolutbetrag der Gleichspannung gering ist. Hierdurch können unerwünschte elektromagnetische Abstrahlungseffekte der Leitung vermieden werden, die z.B. bei der Übertragung eines Wechselstromsignals auftreten können.

Vorteilhaft ist die Verwendung einer erfindungsgemäßen Schnittstelle in einem Kraftfahrzeug insbesondere zwischen einer hochauflösenden Anzeige und einer oder mehreren zugeordneten Bilderzeugungseinheiten, z.B. einer Fahrerinformationsvorrichtung. Auch über die lange Lebensdauer eines Kraftfahrzeugs hinweg ist ein korrekter Datentransport sichergestellt.

Es ist ferner vorteilhaft, auch dann einen fehlerhaften Datentransport zu ermitteln, wenn auf einer der Datenleitungen überhaupt kein Steuersignal mehr anliegt. Bei einem Übertragungsfehler ist es ferner vorteilhaft, eine Reserveleitung vorzusehen, z.B. einen anderen, zur Verfügung stehenden Datenbus, über den die für die defekte Datenleitung vorgesehenen Daten übertragen werden können. Ferner können vorteilhaft auch nur Teildaten Reserveleitung übertragen werden, so dass zumindest eine Anzeige in einer Falschfarbe bzw. in einer reduzierten Auflösung ermöglicht wird.

### Zeichnung

Ausführungsbeispiele der Erfindung sind in der Zeichnung dargestellt und in der nachfolgenden Beschreibung näher erläutert. Es zeigen
Figur 1 ein Ausführungsbeispiel für eine erfindungsgemäße Schnittstelle,
Figur 2 ein Ausführungsbeispiel für ein erfindungsgemäßes Datenpaket,
Figur 3 ein Ausführungsbeispiel für einen Verfahrensablauf für eine erfindungsgemäße Kontrolle von übertragenen Daten.

### Beschreibung des Ausführungsbeispiels

Die erfindungsgemäße Schnittstelle und das erfindungsgemäße Verfahren können für die Übertragung beliebiger Daten verwendet werden. Insbesondere ist die Verwendung für die Übertragung von Bilddaten vorteilhaft, da bei diesen sehr große Datenmengen in sehr schneller Folge übertragen werden müssen. Ferner wird die erfindungsgemäße Schnittstelle vorteilhaft bei sicherheitsrelevanten Anwendungen eingesetzt, da sie eine Kontrolle der Korrektheit der Übertragung ermöglicht. Im Folgenden sind die erfindungsgemäße Schnittstelle und das erfindungsgemäße Verfahren am Beispiel einer Bilddatenübertragung in einem Kraftfahrzeug näher erläutert. Insbesondere ist das Verfahren anwendbar für eine Übertragung eines Kamerasignals zu einer im Fahrzeug vorgesehenen Anzeigeeinheit. Die Kamera ist dabei bevorzugt als eine Nachtsichtkamera ausgeführt, in die z.B. detektierte Personen oder Hindernisse in einer Warnfarbe hervorgehoben angezeigt werden.

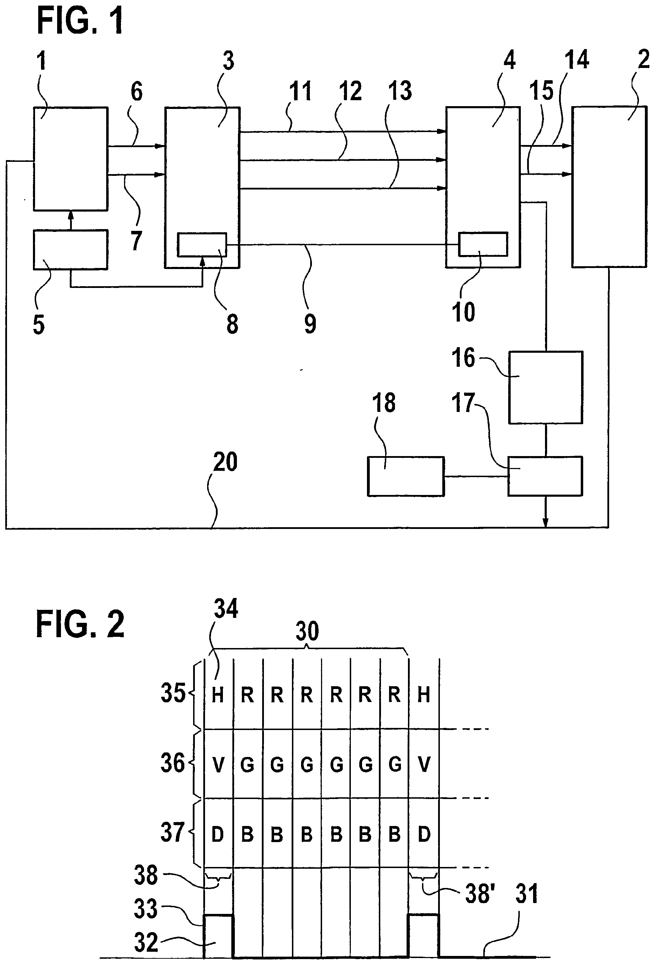

In der Figur 1 ist eine Datenverbindung zwischen einer Bilddatenquelle 1 und einer Anzeigeeinheit 2 dargestellt. Die Bilddatenquelle 1 ist mit einer ersten Schnittstelleneinheit 3 und die Anzeigeeinheit 2 ist mit einer zweiten Schnittstelleneinheit 4 verbunden. Der Bilddatenquelle 1 wird von einem Taktgenerator 5 ein Arbeitstakt zugeführt, mit dem Bilddaten über eine erste Bilddatenleitung 6 und Steuerdaten über eine erste Steuerdatenleitung 7 an die erste Schnittstelleneinheit 3 übertragen werden. In der ersten Schnittstelleneinheit 3 wird der von dem Taktgenerator 5 erzeugte Arbeitstakt in eine Taktumsetzungseinheit 8 zugeführt. Der Taktgenerator kann in einer anderen Ausführungsform vorteilhaft auch in die Bilddatenquelle integriert werden. In einer bevorzugten Ausführungsform dient die Taktumsetzungseinheit 8 dazu, den von dem Taktgenerator 5 zugeführten Takt zu multiplizieren und die erste Schnittstelleneinheit 3 mit einem Vielfachen des zugeführten Taktes anzusteuern, hier um den Faktor sieben. Ferner wird über eine Taktübertragungsleitung 9 der von dem Taktgenerator 5 zugeführte Arbeitstakt an die zweite Schnittstelleneinheit 4 übertragen. Diese weist ebenfalls eine Taktumsetzungseinheit 10 auf, die ebenfalls den Arbeitstakt um den gleichen Faktor erhöht und damit die zweite Schnittstelleneinheit 4 taktet. Die von der ersten Schnittstelleneinheit 3 über die erste Bilddatenleitung 6 und die erste Steuerdatenleitung 7 erhaltene Steuerdaten werden von der ersten Schnittstelleneinheit 3 verarbeitet und gemäß einem vorgegebenen Datenprotokoll in Datenpakete gegliedert. Diese Datenpakete werden über eine erste, zweite und dritte Datenleitung 11, 12, 13 von der ersten Schnittstelleinheit 3 zu der zweiten Schnittstelleneinheit 4 übertragen. Das Vielfache des Arbeitstaktes der ersten und der zweiten Schnittstelleneinheit 3, 4 ist dabei derart gewählt, dass in jedem Zyklus dieses Taktes ein Bit des Datenpaketes über jede der Datenleitungen 11, 12, 13 übertragen wird. Die Übertragungskapazität kann dadurch erhöht werden, dass weitere Datenleitungen zwischen der ersten Schnittstelleneinheit 3 und der zweiten Schnittstelleneinheit 4 vorgesehen werden. Ebenso ist es möglich, die Datenübertragung z.B. auf zwei Datenleitungen zu reduzieren. Die Datenleitungen sind dabei vorzugsweise jeweils als Zweidrahtleitungen ausgeführt, die ein Gleichspannungssignal von der ersten Schnittstelleneinheit 3 zu der zweiten Schnittstelleneinheit 4 leiten. Eine Datenübertragung erfolgt dabei in der Weise, dass einem ersten Signalwert (low) ein erster Gleichspannungswert zugeordnet ist, während einem zweiten Datenwert (high) ein zweiter Gleichspannungswert zugeordnet ist, wobei der Wert low z.B. 1,2 V und der Wert high z.B. 1,4 V sein kann. Eine Detektion des Spannungswertes erfolgt z.B. über eine Komparatorschaltung in der zweiten Schnittstelleneinheit 4. Die Datenleitungen 11, 12, 13 sind in einer Ausführungsform als Zweidrahtleitungen ausgeführt, die eine Übermittlung des Gleichspannungssignals ermöglichen Ein Übertragungsverfahren mittels veränderlicher Gleichspannung ist als LVDS (Low Voltage Differential Signal) bekannt.

Die zweite Schnittstelleneinheit 4 gewinnt gemäß dem festgelegten Datenübertragungsprotokoll aus den über die Datenleitungen 11, 12, 13 übertragenen Datenpaketen ein Bilddatensignal und ein Steuerdatensignal zurück, wobei die Bilddaten über eine zweite Bilddatenleitung 14 und die Steuerdaten über eine zweite Steuerdatenleitung 15 an die Anzeigeeinheit 2 übertragen werden. Die Anzeigeeinheit 2 kann z.B. eine Ansteuereinheit einer Flüssigkristallzelle, z.B. Zeilen- und Spaltentreiber, die Ansteuereinheit einer Kathodenstrahlröhre oder eine Grafikrecheneinheit zur Darstellung der übermittelten Bilddaten in einer Anzeige sein. Ferner werden die ermittelten Steuerdaten an eine Auswerteeinheit 16 weitergeleitet, die die Korrektheit der übertragenen Steuerdaten und des übertragenen Taktes prüft. Hierzu stehen der Steuereinheit zumindest Informationen über die Taktfrequenz, die Zeilenwechselfrequenz oder die Bildwechselfrequenz zur Verfügung. Als weitere Steuersignale können beispielsweise ein Resetsignal oder das Signal "Data ready" übertragen werden, das die Übertragung gültiger Daten angibt. In der Auswerteeinheit 16 wird die Korrektheit der übertragenen Steuersignale überprüft. Hierzu stehen der Auswerteeinheit 16 zumindest die übertragene Taktfrequenz, eine gespeicherte Frequenz für einen Bildzeilenwechsel und eine gespeicherte Frequenz für einen Bildseitenwechsel zur Verfügung. Die Auswerteeinheit 16 überprüft zunächst, ob überhaupt Steuersignale vorliegen und vergleicht die Eingangsspannungen mit Referenzwerten, die für die Datenwerte high und low vorgesehen sind. Liegen korrekte Signale an, so vergleicht sie die empfangenen Steuersignale bzw. einen Wechsel der Steuersignale mit dem Zeitpunkt, an dem dieser Wechsel erwartet worden wäre. Hierbei werden Toleranzen bei der Bildübertragung berücksichtigt, z.B. eine fehlende Synchronisation eines Quellsignals mit der Übertragungsfrequenz. Wird ein maximal hierfür erlaubter Zeitraum überschritten, so wird ein Fehler festgestellt. Stellt die Auswerteeinheit 16 eine fehlerhafte Übertragung fest, so gibt sie diese Information an eine Verarbeitungseinheit 17 weiter. Diese gibt mittels einer Warneinrichtung 18 an einen Benutzer eine Warnung dahingehend aus, dass die mittels der Anzeigeeinheit 2 dargestellten Daten möglicherweise nicht korrekt sind. Ferner ist die Bilddatenquelle 1 mit der Anzeigeeinheit 2 über einen Datenbus 20 verbunden, der z.B. als ein CAN-Bus ausgeführt ist (Controller Area Network). Bei einer fehlerhaften Datenverbindung über eine der Datenleitungen 11, 12, 13 wird die Bilddatenquelle 1 mit der Anzeigeeinheit 2 über diesen Datenbus 20 verbunden, der ansonsten der Übertragung anderer Fahrzeugdaten dient, wobei die für die Übertragung über die als fehlerhaft ermittelte Datenleitung vorgesehenen Daten zumindest teilweise über den Datenbus 20 übertragen werden, so dass zumindest eine eingeschränkte Anzeige mit der Anzeigeeinheit 2 ermöglicht wird.

In der Figur 2 ist ein Ausführungsbeispiel für ein übertragenes Datenpaket 30 dargestellt. Über einer Zeitachse 31 ist ein Taktsignal 32 dargestellt, das mit seiner ansteigenden Taktflanke 33 den Takt für die Übertragung des Datenpakets vorgibt. Innerhalb einer Taktperiodendauer wird genau ein Datenpaket 30 übertragen, das sich in sieben einzelne Bits 34 unterteilt, von denen aus Gründen der Übersichtlichkeit der Zeichnung nur eines in der Figur 2 bezeichnet ist. Das Datenpaket 30 teilt sich in ein erstes Datenwort 35, das über die erste Datenleitung 11 übertragen wird, in ein zweites Datenwort 36, das über die zweite Datenleitung 12 übertragen wird und in ein drittes Datenwort 37 auf, das über die dritte Datenleitung 13 übertragen wird. Die einzelnen Bits werden dabei mit dem vervielfachten Takt innerhalb der für das Datenpaket vorgesehenen Zeit übertragen. Bei dem hier gewählten Ausführungsbeispiel sind jeweils die ersten Datenbits 38 des Datenpaketes 30 diejenigen Datenbits, die die Steuerinformationen beinhalten. Dieses erste Datenbit eines Datenpaketes ist auch für das nachfolgende Datenpaket mit dem Bezugszeichen 38' versehen dargestellt. H bezeichnet das horizontale Synchronisationssignal (Zeilensynchronisation), V das vertikale Synchronisationssignal (Bildseitensynchronisation), D das Signal Data Ready, das die Übertragung gültiger Daten anzeigt. Anstelle der hier gewählten Datenübertragung mit sieben Bit pro Datenwort können auch beliebige andere Größen von Datenwörtern größer oder gleich 2 Bit pro Datenwort für eine Datenübertragung gewählt werden. Die gemäß dem Ausführungsbeispiel geschilderte Größe von sieben Bit erlaubt eine Bildpunktbeschreibung von 3*6 Bit, wodurch für die Beschreibung eines Bildpunktes ein ausreichender Datenumfang bereit steht. Ein Steuersignal wird dann gegeben, wenn das jeweilige Steuerdatenbit auf den Wert high gesetzt wird. Die übrigen sechs Bits bezeichnen für jedes Datenwort eine Information über die Helligkeit einer Grundfarbe eines Bildpunktes. So ist hier in dem ersten Datenwort eine 6-Bit-Information für die Helligkeit der roten Farbe, in dem zweiten Datenwort 36 die Helligkeit für die grüne Farbe und in dem dritten Datenwort die Helligkeit für die blaue Farbe angegeben. Dies ist in der Zeichnung mit den Buchstaben R, G, B gekennzeichnet. Die hier gewählte Aufteilung und Sortierung der Datenbits stellt dabei nur ein Ausführungsbeispiel dar, wobei die Zuordnung der Datenbits beliebig untereinander getauscht werden kann, sofern die Position der einzelnen Bits in einem Datenprotokoll eindeutig festgelegt ist und sichergestellt wird, dass auf jeder Datenleitung zumindest ein Steuerbit übertragen wird. Auch die Position des Steuerbits innerhalb des Datenpaketes 30 bzw. innerhalb des Datenwortes 35, 36 bzw. 37 ist dabei frei wählbar.

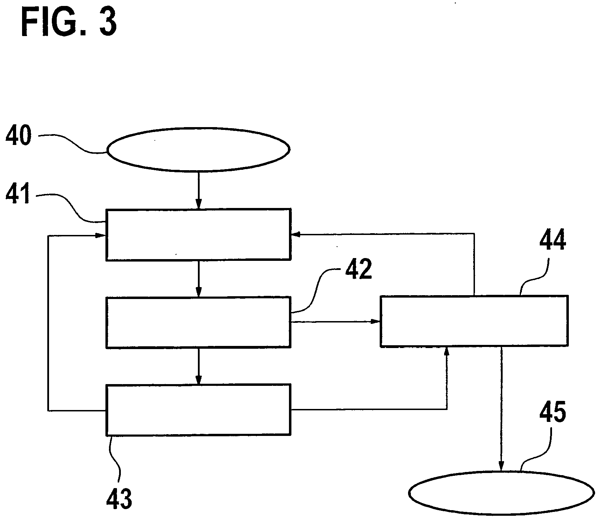

In der Figur 3 ist ein erfindungsgemäßer Verfahrensablauf dargestellt. Ausgehend von einem Initialisierungsschritt 40 wird eine Bilddatenübertragung gestartet. In einem Datenübertragungsschritt 41 wird ein Datenpaket von der ersten Schnittstelleneinheit 3 zu der zweiten Schnittstelleneinheit 4 übertragen. In einem anschließenden ersten Prüfschritt 42 wird von der Auswerteeinheit 16 überprüft, ob überhaupt ein Steuersignal übertragen wurde oder ob der zu dem Zeitpunkt für das Anliegen des Steuersignals innerhalb des Datenpaketes gemessene Spannungswert innerhalb eines für die Werte high oder low erlaubten Spannungsfenster liegt. Ist dies der Fall, so wird zu einem zweiten Prüfschritt 43 verzweigt, in dem überprüft wird, ob ein Wechsel des Steuerdatums gegenüber dem Wert in vorhergehenden Datenpaketen stattgefunden hat und falls nicht, ob dieser Wechsel des Steuerdatums mittlerweile überfällig ist. Wurde innerhalb eines vorgegebenen Zeitraums, der z.B. durch die horizontale und vertikale Ansteuerungsfrequenz gegeben ist, ein Steuersignal detektiert, so ist davon auszugehen, dass auch die Bilddaten korrekt übertragen worden sind. Dann wird zu einem nächsten Datenübertragungsschritt 41 zurückverzweigt. Wird dagegen eine fehlerhafte Datenübertragung festgestellt, da entweder gar kein Steuersignal oder kein Wechsel des Steuersignals erfasst worden ist, so wird sowohl von dem ersten Prüfschritt 42 als auch von dem zweiten Prüfschritt 43 zu einem Warnschritt 44 verzweigt, in dem eine akustische und/oder optische Warnung an einen Benutzer ausgegeben wird. Gegebenenfalls wird auf eine Hilfsübertragung mittels des Datenbusses 20 umgeschaltet. Wird in dem ersten Prüfschritt 42 dagegen festgestellt, dass kein Taktsignal übertragen wird, so ist keine erfolgreiche Datenübertragung möglich. Auch dies wird einem Benutzer ausgegeben und das Datenübertragungsverfahren wird in einem Endschritt 45 beendet.

In dem hier gezeigten Ausführungsbeispiel werden Daten in einer Richtung von der ersten Schnittstelleneinheit 3 an die zweite Schnittstelleneinheit 4 übertragen. Die Übertragung kann dabei jedoch auch derart ausgeführt werden, dass die Übertragungsrichtung gewechselt wird.

## Patentansprüche

1. Schnittstelle zur Bilddatenübertragung mit mindestens zwei Datenleitungen und mit einer Taktleitung zur Übertragung eines Steuertaktes, wobei Bildpunktdaten (R, G, B) und Steuerdaten (H, V, D), welche zumindest ein vertikales und ein horizontales Bildsynchronisierungssignal (H, V) sind, zur Erzeugung eines Bildes aus den Bildpunktdaten über die Datenleitungen (11, 12, 13) übertragen werden, **dadurch gekennzeichnet dass** auf einer der mindestens zwei Datenleitungen das vertikale Bildsynchronisierungssignal (V) übertragen wird, und auf der anderen der mindestens zwei Datenleitungen das horizontale Bildsynchronisierungssignal (H) übertragen wird, und anhand der Übertragung des vertikalen und horizontalen Bildsynchronisierungssignals die Korrektheit für jeder der mindestens zwei Datenleitungen überprüft wird.

2. Schnittstelle nach Anspruch 1, **dadurch gekennzeichnet, dass** eine vorgebbare Anzahl von Bilddaten und ein Steuerdatum ein Datenpaket bilden und dass die Datenpakete gemäß dem Steuertakt übertragbar sind.

3. Schnittstelle nach Anspruch 2, **dadurch gekennzeichnet, dass** ein Datenpaket derart gewählt ist, dass das Datenpaket (30) einen Bildpunkt eines darzustellenden Bildes vorzugsweise durch Angabe eines Farbwertes für Rot, Grün und Blau beschreibt.

4. Schnittstelle nach einem der Ansprüche 2-3, **dadurch gekennzeichnet, dass** ein Datenpaket aus sechs Bit Bilddaten und einem Bit Steuerdatum besteht.

5. Schnittstelle nach einem der vorhergehenden Ansprüche, **dadurch gekennzeichnet, dass** ein Zähler (16) zum Zählen der Taktimpulse seit dem letzten Wechsel eines der Steuerdaten vorgesehen ist, dass eine Vergleichseinheit (17) zum Vergleich des Zählerwertes mit einem gespeicherten Wert vorgegeben ist und dass ein Fehlerzustand erfasst wird, wenn der Zählerwert den gespeicherten Wert um ein vorgegebenes Maß überschreitet.

6. Schnittstelle nach einem der vorhergehenden Ansprüche, **dadurch gekennzeichnet, dass** die Datenleitungen (11, 12, 13) mit einer Gleichspannung beaufschlagt sind und dass die Daten dadurch übertragbar sind, dass die Gleichspannung mit einer Signalsspannung beaufschlagt wird, deren Betrag geringer als der Betrag der Gleichspannung ist.

7. Verwendung einer Schnittstelle nach einem der vorhergehenden Ansprüche zur Bilddatenübertragung in einem Kraftfahrzeug zwischen einer Fahrerinformationsvorrichtung und einer Anzeigeeinheit.

8. Verfahren zur Bilddatenübertragung mit mindestens zwei Datenleitungen und mit einer Taktleitung zur Übertragung eines Steuertaktes, wobei Bildpunktdaten und Steuerdaten, welche zumindest ein vertikales und ein horizontales Bildsynchronisierungssignal (H, V) sind, zur Erzeugung eines Bildes aus den Bildpunktdaten übertragen werden, **dadurch gekennzeichnet, dass** auf einer der mindestens zwei Datenleitungen das vertikale Bildsynchronisierungssignal (V) übertragen wird, und auf der anderen der mindestens zwei Datenleitungen das horizontale Bildsynchronisierungssignal (H) übertragen wird, und dass anhand einer Übertragung des vertikalen und horizontalen Bildsynchronisierungssignals die Korrektheit jeder der mindestens zwei Datenleitungen überprüft wird.

9. Verfahren nach Anspruch 8, **dadurch gekennzeichnet, dass** eine fehlerhafte Übertragung dann ermittelt wird, wenn kein Steuerdatum übertragen wird oder das Steuerdatum für einen Zeitraum konstant bleibt, der länger als ein vorgegebener Zeitzraum ist.

10. Verfahren nach einem der Ansprüche 8-9, **dadurch gekennzeichnet, dass** bei einem erfassten Übertragungsfehler eine Datenübertragung auf eine Reserveleitung geschaltet wird.

## Claims

1. Interface for transmitting image data with at least two data lines and with a clock line for transmitting a control clock, wherein pixel data (R, G, B) and control data (H, V, D), which are at least one vertical and one horizontal image synchronization signal (H, V), are transmitted via the data lines (11, 12, 13) for the purpose of producing an image from the pixel data, **characterized in that** the vertical image synchronization signal (V) is transmitted on one of the at least two data lines and the horizontal image synchronization signal (H) is transmitted on the other of the at least two data lines, and **in that** the correctness for each of the at least two data lines is checked using the transmission of the vertical and horizontal image synchronization signals.

2. Interface according to Claim 1, **characterized in that** a predefinable number of image data items and a control data item form a data packet, and **in that** the data packets can be transmitted according to the control clock.

3. Interface according to Claim 2, **characterized in that** a data packet is selected in such a manner that the data packet (30) describes a pixel of an image to be displayed, preferably by stating a colour value for red, green and blue.

4. Interface according to one of Claims 2-3, **characterized in that** a data packet consists of six bits of image data and one bit of control data.

5. Interface according to one of the preceding claims, **characterized in that** a counter (16) for counting the clock pulses since the last change of one of the control data items is provided, **in that** a comparison unit (17) for comparing the counter value with a stored value is predefined, and **in that** an error state is detected if the counter value exceeds the stored value by a predefined amount.

6. Interface according to one of the preceding claims, **characterized in that** a DC voltage is applied to the data lines (11, 12, 13), and **in that** the data can be transmitted by applying a signal voltage to the DC voltage, the magnitude of which signal voltage is less than the magnitude of the DC voltage.

7. Use of an interface according to one of the preceding claims for transmitting image data in a motor vehicle between a driver information apparatus and a display unit.

8. Method for transmitting image data with at least two data lines and with a clock line for transmitting a control clock, wherein pixel data and control data, which are at least one vertical and one horizontal image synchronization signal (H, V), are transmitted for the purpose of producing an image from the pixel data, **characterized in that** the vertical image synchronization signal (V) is transmitted on one of the at least two data lines and the horizontal image synchronization signal (H) is transmitted on the other of the at least two data lines, and **in that** the correctness of each of the at least two data lines is checked using a transmission of the vertical and horizontal image synchronization signals.

9. Method according to Claim 8, **characterized in that** an incorrect transmission is determined when no control data item is transmitted or the control data item remains constant for a period which is longer than a predefined period.

10. Method according to one of Claims 8-9, **characterized in that** a data transmission is switched to a reserve line if a transmission error is detected.

## Revendications

1. Interface pour la transmission de données d'image avec au moins deux lignes de données et avec une ligne d'horloge destinée à la transmission d'une horloge de commande, des données de pixel (R, G, B) et des données de commande (H, V, D), lesquelles sont au moins un signal de synchronisation d'image verticale et un de synchronisation horizontale (H, V), étant transmises sur les lignes de données (11, 12, 13) en vue de générer une image à partir des données de pixel, **caractérisée en ce que** le signal de synchronisation d'image verticale (V) est transmis sur l'une des au moins deux lignes de données et un horizontal et le signal de synchronisation d'image horizontale (H) est transmis sur l'autre des au moins deux lignes de données, et **en ce que** la conformité pour chacune des au moins deux lignes de données est contrôlée au moyen de la transmission du signal de synchronisation d'image verticale et horizontale.

2. Interface selon la revendication 1, **caractérisée en ce qu'**un nombre pouvant être prédéfini de données d'image et une date de commande forment un paquet de données, et **en ce que** les paquets de données sont transmis conformément à l'horloge de commande.

3. Interface selon la revendication 2, **caractérisée en ce qu'**un paquet de données est sélectionné de telle sorte que le paquet de données (30) décrit un pixel d'une image à représenté, de préférence en indiquant une valeur de couleur pour le rouge, le vert et le bleu.

4. Interface selon l'une des revendications 2 à 3, **caractérisée en ce qu'**un paquet de données se compose de six bits de données d'image et d'un bit de date de commande.

5. Interface selon l'une des revendications précédentes, **caractérisée en ce qu'**il existe un compteur (16) destiné à compter les impulsions d'horloge depuis le dernier changement de l'une des données de commande, **en ce qu'**une unité de comparaison (17) est prédéfinie pour comparer la valeur du compteur avec une valeur mémorisée, et **en ce qu'**un état de défaut est détecté lorsque la valeur du compteur dépasse la valeur mémorisée d'un montant prédéfini.

6. Interface selon l'une des revendications précédentes, **caractérisée en ce que** les lignes de données (11, 12, 13) sont alimentées avec une tension continue et **en ce que** les données peuvent être transmises par le fait que la tension continue est chargée par une tension de signal dont l'amplitude est inférieure à l'amplitude de la tension continue.

7. Utilisation d'une interface selon l'une des revendications précédentes pour la transmission de données d'image dans un véhicule automobile entre un dispositif d'information du conducteur et une unité d'affichage.

8. Procédé pour la transmission de données d'image avec au moins deux lignes de données et avec une ligne d'horloge destinée à la transmission d'une horloge de commande, des données de pixel et des données de commande, lesquelles sont au moins un signal de synchronisation d'image verticale et un de synchronisation horizontale (H, V), étant transmises en vue de générer une image à partir des données de pixel, **caractérisé en ce que** le signal de synchronisation d'image verticale (V) est transmis sur l'une des au moins deux lignes de données et un horizontal et le signal de synchronisation d'image horizontale (H) est transmis sur l'autre des au moins deux lignes de données, et **en ce que** la conformité de chacune des au moins deux lignes de données est contrôlée au moyen d'une transmission du signal de synchronisation d'image verticale et horizontale.

9. Procédé selon la revendication 8, **caractérisé en ce qu'**une transmission erronée est déterminée quand aucune date de commande n'est transmise ou lorsque la date de commande reste constante pendant une période qui est plus longue qu'une période prédéfinie.

10. Procédé selon l'une des revendications 8 et 9, **caractérisé en ce qu'**en cas de détection d'une erreur de transmission, une transmission de données est commutée sur une ligne de réserve.
